# EUROPEAN PATENT APPLICATION

(11) **EP 2 814 298 A1**
(43) Date of publication of application: **17.12.2014**
(21) Application number: 13754408.6
(22) Date of filing: 20.02.2013
(51) Int. Cl.: H04W 84/12

(54) **INFORMATION PUSH METHOD, DEVICE AND SYSTEM BASED ON WIRELESS LOCAL AREA NETWORK**

(30) Priority: 02.03.2012 CN 201210052696
(71) Applicant: Huawei Device Co., Ltd., Shenzhen, Guangdong 518129 (CN)
(72) Inventor: CHEN, Ji, Shenzhen Guangdong 518129 (CN); DING, Zhiming, Shenzhen Guangdong 518129 (CN); FANG, Ping, Shenzhen Guangdong 518129 (CN); XIAO, Bin, Shenzhen Guangdong 518129 (CN)
(74) Representative: Maiwald Patentanwalts GmbH
(86) International application number: PCT/CN2013/071687
(87) International publication number: WO 2013/127305

(57) **Abstract**

Embodiments of the present invention disclose a method, an apparatus, and a system for pushing information based on a wireless local area network. The method includes: generating a push information indication message, where the push information indication message includes index information of one or more pieces of push information, where the index information includes at least one of a sequence number, an information digest, a category number, and a category name of the push information; broadcasting the push information indication message; and sending the push information. With the present invention, information may be pushed on wireless local area networks that are widely used at present, such as a WiFi network. Especially, in places such as scenic spots, shopping malls, and exhibition halls, WiFi networks can be used to introduce related information to users, instead of making explanations or presentations manually.

## Description

This application claims priority to Chinese Patent Application No. 201210052696.3, filed on March 2, 2012, which is hereby incorporated by reference in its entirety.

### FIELD OF THE INVENTION

The present invention relates to the field of wireless local area network communication, and in particular, to a method, an apparatus, and a system for pushing information based on a wireless local area network.

### BACKGROUND OF THE INVENTION

Push (Push) refers to a service form in which an information publisher (server) actively provides information for an information receiver (client). At present, a plurality of push forms is popular. For example, when a user uses some chatting tools, news is pushed to the user from time to time.

Since the release of a wireless local area network standard IEEE802.11 in 1997, WiFi (Wireless Fidelity, WiFi), driven by the WiFi Alliance formed by leading corporations in industries, has been developing quickly thanks to its advantages such as fast deployment, ease of use, and high transmission rate. Because nowadays notebook computers, PDAs, mobile phones, and so on all support the WiFi technology, and users have requirements for mobile office, the WiFi technology is widely applied in various industries. Access points of WiFi networks are widely distributed in places such as hotels, cafeterias, schools, and hospitals, and it may be said that WiFi is present everywhere in people's life.

A WiFi network is characterized in that there is a WiFi access point (access point, Access Point, abbreviated as AP), where the AP provides network access services for wireless terminals within its coverage, including stations (station, Station, abbreviated as STA) that support the 802.11 protocol, and the radius of the coverage is tens of meters to hundreds of meters.

Wireless local area networks such as WiFi networks are widely used nowadays. At present, however, no technology is available for implementing push on a wireless local area network such as a WiFi network. How to implement information pushing on a wireless local area network such as a WiFi network has become a hot topic of research.

### SUMMARY OF THE INVENTION

A technical problem to be solved by embodiments of the present invention is to provide a method, an apparatus, and a system for pushing information based on a wireless local area network, which can push information on the wireless local area network.

To solve the technical problem, an embodiment of the present invention provides a method for pushing information based on a wireless local area network, where the method includes:
generating a push information indication message, where the push information indication message includes index information of one or more pieces of push information, where the index information includes at least one of a sequence number, an information digest, a category number, and a category name of the push information;
broadcasting the push information indication message; and
sending the push information.

Correspondingly, an embodiment of the present invention also provides another method for pushing information based on a wireless local area network, where the method includes:
receiving a push information indication message generated and broadcast by a wireless access point; and
receiving, according to the push information indication message, push information sent by the wireless access point;
where, the push information indication message generated by the wireless access point includes index information of one or more pieces of push information, where the index information includes at least one of a sequence number, an information digest, a category number, and a category name of the push infonnation.

Correspondingly, an embodiment of the present invention also provides a wireless access point, which includes:
a processing module, configured to generate a push information indication message, where the push information indication message includes index information of one or more pieces of push information, where the index information includes at least one of a sequence number, an information digest, a category number, and a category name of the push information;
a broadcasting module, configured to broadcast the push information indication message; and
a sending module, configured to send the push information.

Correspondingly, an embodiment of the present invention also provides a wireless terminal, which includes:
a communicating module, configured to receive a push information indication message generated and broadcast by a wireless access point, and receive, according to the push information indication message, push information sent by the wireless access point;
wherein, the push information indication message generated by the wireless access point includes index information of one or more pieces of push information, where the index information includes at least one of a sequence number, an information digest, a category number, and a category name of the push information.

Correspondingly, an embodiment of the present invention also provides a system for pushing information based on a wireless local area network, including at least one wireless access point and at least one wireless terminal, where the wireless access point includes the wireless access point described above, and the wireless terminal includes the wireless terminal described above.

The embodiments of the present invention have the following beneficial effects:
With the present invention, information may be pushed on wireless local area networks that are widely used at present, such as a WiFi network. Especially, in places such as scenic spots, shopping malls, and exhibition halls, wireless local area networks such as WiFi networks can be used to push information and introduce related information to users, instead of making explanations or presentations manually.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.
FIG. 1 is a schematic structural diagram of a system for pushing information based on a wireless local area network according to the present invention;
FIG. 2 is a schematic structural diagram of a wireless access point in FIG. 1;
FIG. 3 is a schematic structural diagram of a wireless terminal in FIG. 1;
FIG. 4 is a schematic flowchart of a first embodiment of a method for pushing information based on a wireless local area network according to the present invention;
FIG. 5 is a schematic flowchart of a second embodiment of a method for pushing information based on a wireless local area network according to the present invention;
FIG. 6 is a schematic flowchart of a first embodiment of another method for pushing information based on a wireless local area network according to the present invention; and
FIG. 7 is a schematic flowchart of a second embodiment of another method for pushing information based on a wireless local area network according to the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

In the embodiments of the present invention, the wireless local area network may be a WiFi network, and the wireless access point may be a WiFi access point or a micro base station and so on. The following describes each embodiment provided by the present invention by using a wireless local area network which is a WiFi network and a wireless access point which is a WiFi access point as an example.

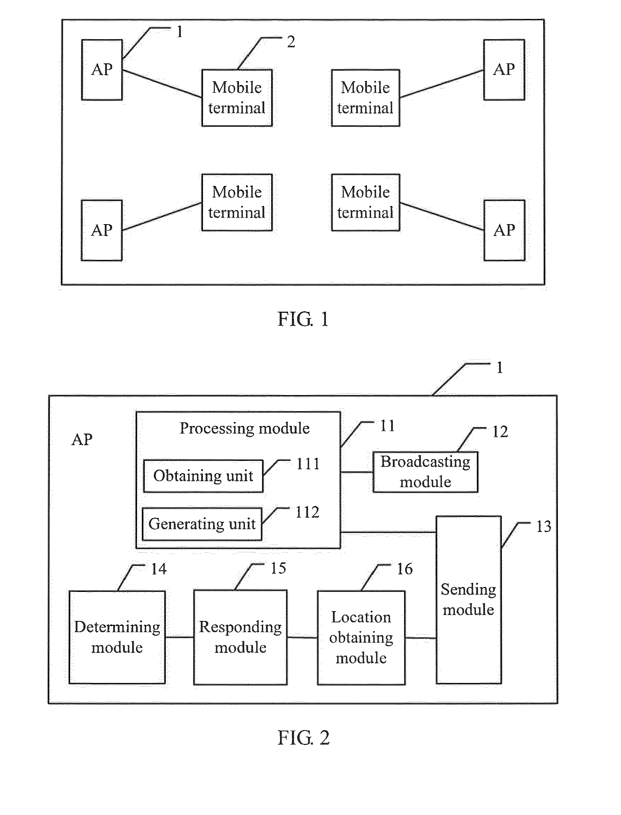

FIG. 1 is a schematic structural diagram of a system for pushing information based on a wireless local area network according to the present invention. The system in this embodiment includes: at least one wireless access point AP1 and at least one wireless terminal 2, where the wireless terminal 2 may be a STA. The wireless access point may be a WiFi access point.

In this embodiment, after an information publisher provides for the AP1 the push information to be sent, the AP1 generates and broadcasts a push information indication message to all wireless terminals in the coverage. After receiving the push information indication message, each wireless terminal in the coverage of the AP1 receives, according to the mode indicated by the push information indication message, the push information subsequently sent by the AP1 for displaying the push information to a user. The function of the push information indication message sent by the AP1 is to forecast for the wireless terminal the AP has which push information to be pushed, push time, and other information, to facilitate receiving of the wireless terminal.

Specifically, the AP1 may carry the push information indication message through a beacon frame Beacon. The information publisher may indicate to the wireless terminal through the Beacon of the AP1, which information needs to be pushed by the information publisher. The wireless terminal may know the information to be pushed by the AP1 through the Beacon, and receive, according to the mode indicated by the Beacon, the information frame subsequently pushed by the AP1 and including push information content.

Specifically, FIG. 2 is a schematic structural diagram of a WiFi access point AP in FIG. 1. The AP1 is used as an example for description, and the processing mode of other APs is the same as that of the AP1. The AP1 includes:
a processing module 11, configured to generate a push information indication message, where the push information indication message includes index information of one or more pieces of push information, where the index information includes at least one of a sequence number, an information digest, a category number, and a category name of the push information;
a broadcasting module 12, configured to broadcast the push information indication message; and
a sending module 13, configured to send the push information.

After obtaining the push information that the information publisher needs to send, the processing module 11 generates a push information indication message according to the push information. Specifically, an information element may be added to a Beacon as a push information indication message, used to indicate the corresponding push information, where the structure of the information element may be the format shown in Table 1:

**Table 1**

| | | | | | | | |
|---|---|---|---|---|---|---|---|
| Element ID | Length | Category | Information Digest | Start Time | Category | Information Digest | Start Time |

The element identifier Element ID is used to indicate the identifier number of the information element in the Beacon, where the information element is used to indicate a push information indication message; the length Length is used to indicate the length of the data part in the information element, namely, the length of other fields than the element header Element ID and Length in Table 1; the category indicates the category of the push information indicated by the push information indication message, and may be a category number or a category name and so on, where the category may include clothing, eating, electric appliances, and so on, which helps the user to filter information according to requirements; the information digest (digest, digest) is a result obtained by performing a digest operation for the push information content indicated by the push information indication message by the processing module 11, or is directly the sequence number of the push information, which may be used to identify whether the indicated push information is a duplicate of the previous push information; the start time indicates the time of pushing the push information pushed by the sending module 13 and indicated by the push information indication message, so that the STA can timely use the WiFi function to receive the push information. One push information indication message may indicate one or more pieces of push information, and one information element may indicate one or more pieces of push information. Table 1 shows the case that one information element indicates two pieces of push information.

It should be noted that the above element identifier Element ID and length Length in the information element added to the Beacon are fields required for the information element, while one or more of the fields of the category, information digest, and start time may be selected by persons skilled in the art for configuration according to actual requirements, or the fields may also be split or combined or modified, for example, the category field may be split into two fields, category number and category name, or some fields may be added. The structure is not limited to the structure shown in FIG. 1, for example, the structure in Table 2 may be used, as long as the user is prompted of the element identifier Element ID, length Length, and the category of the push information.

**Table 2**

| | | |
|---|---|---|
| Element ID | Length | Category |

After the processing module 11 generates a push information indication message, the broadcasting module 12 may immediately broadcast the generated push information indication message according to the specific requirement, or may also broadcast the corresponding push information indication message periodically according to a predetermined time interval.

The sending module 13 is configured to push the corresponding push information to the wireless terminal 2, and when the information has a push time requirement, send the push information having the time requirement when the push time arrives.

Specifically, the format of the information frame of the corresponding push information sent by the sending module 13 may be the structure shown in Table 3:

**Table 3**

| | | |
|---|---|---|
| MAC Header | IP Header | Content |

The sending module 13 works at the MAC layer, and its pushed data unit is a MAC frame, where each MAC frame includes the MAC header. The upper layer of the MAC layer may be an IP layer, and the MAC layer bears the data transmission service of the IP layer. Therefore, the data part of the MAC frame carries the IP header and the specific data content of the push information, for example, content such as text information and picture information.

Further specifically, as shown in FIG. 2, the processing module 11 may include:
an obtaining unit 111, configured to obtain index information of one or more pieces of push information; and
a generating unit 112, configured to generate a push information indication message including the index information of the one or more pieces of push information.

The processing module 11 may extract the information digest of the push information through the obtaining unit 111 according to a digest algorithm, for example, obtain the information digest by using a Hash algorithm to perform an operation for the push information content, and/or determine the category of the push information according to the keyword included in the push information content. Then the generating unit 112 generates the push information indication message as shown in Table 1 or Table 2.

Optionally, in an embodiment of a WiFi access point provided by the present invention, for the pushing information having a push time requirement, the processing module 11 is further configured to determine the push time corresponding to one or more pieces of push information, and add the push time to the push information indication message; while the sending module 13 may be specifically configured to send, at the push time, the push information corresponding to the push time, in the one or more pieces of push information. To be specific, the sending module 13 broadcasts the push information to the wireless terminal in the coverage.

Optionally, in an embodiment of a WiFi access point provided by the present invention, after the broadcasting module 12 broadcasts the push information indication message, the wireless terminal may generate a subscription request message according to the requirement of the user, where the subscription request message includes index information of one or more pieces of push information requested by the wireless terminal, and send the subscription request message to the AP1.

Further specifically, as shown in FIG. 2, the WiFi access point AP1 may further include:
a determining module 14, configured to determine whether a subscription request message sent by the wireless terminal according to the push information indication message is received;
a responding module 15, configured to send a subscription response message to the wireless terminal according to the received subscription request message when a determination result of the determining module 14 is yes, where the subscription response message includes information indicating subscription success or failure; and
a location obtaining module 16, configured to obtain location information of the wireless terminal after determining that the subscription of the wireless terminal is successful.

The sending module 13 is specifically configured to push, to the wireless terminal according to the location information of the wireless terminal determined by the location obtaining module 16, push information corresponding to the location information, in the push information requested by the subscription request message. To be specific, according to the location of the wireless terminal, the sending module 13 unicasts the push information corresponding to the location to the wireless terminal, For example, when it is known that the wireless terminal is located in the location range of a mobile exhibition stand, and the wireless terminal has subscribed to the push information related to the mobile exhibition stand successfully, the AP1 sends push information corresponding to the mobile exhibition stand to the wireless terminal.

In other words, the AP1 may further perform preliminary screening based on the subscription request message according to the requirement of the user, and send push information to the user selectively. And the AP1 sends specific push information to the user according to the actual location of the user (or wireless terminal). For example, in some exhibition halls, the AP1 sends different push information to users at different exhibition stands, for example, sends information about mobile phone products to the users at the mobile exhibition stand, and sends information about television products to the users at the television exhibition stand.

The location obtaining module 16 may obtain the location information of the wireless terminal in a WiFi mode, that is, the user reports location configuration information and reporting time to the AP1 and multiple secondary APs (for example, other three APs than the AP1 in FIG. 1) through the wireless terminal periodically, and the AP1 performs a comprehensive operation to obtain the coordinates of the wireless terminal, namely, the location, according to the location configuration information and reporting time reported by the wireless terminal and received by the AP 1 itself, the location configuration information and corresponding reporting time of the wireless terminal transmitted from the other secondary APs, and the location coordinates of the AP1 and the other multiple secondary APs. Definitely, the location obtaining module 16 may further obtain the location information of the wireless terminal by obtaining the location reported by the wireless terminal in real time through a positioning system such as the GPS in the prior art.

Optionally, in an embodiment of a WiFi access point provided by the present invention, for the push information having a push time requirement, the processing module 11 is further configured to determine push time corresponding to one or more pieces of push information, and add the push time to the push information indication message. In addition, after the broadcasting module 12 broadcasts the push information indication message, the wireless terminal may generate a subscription request message according to the requirement of the user, where the subscription request message includes index information of one or more pieces of push information requested by the wireless terminal, and send the subscription request message to the AP1. The sending module 13 is specifically configured to send, at the push time, to the wireless terminal according to the location information of the wireless terminal, push information corresponding to the location information and corresponding to the push time, in the push information requested by the subscription request message. To be specific, the sending module 13 unicasts the corresponding push information to the wireless terminal according to the time and the location of the wireless terminal.

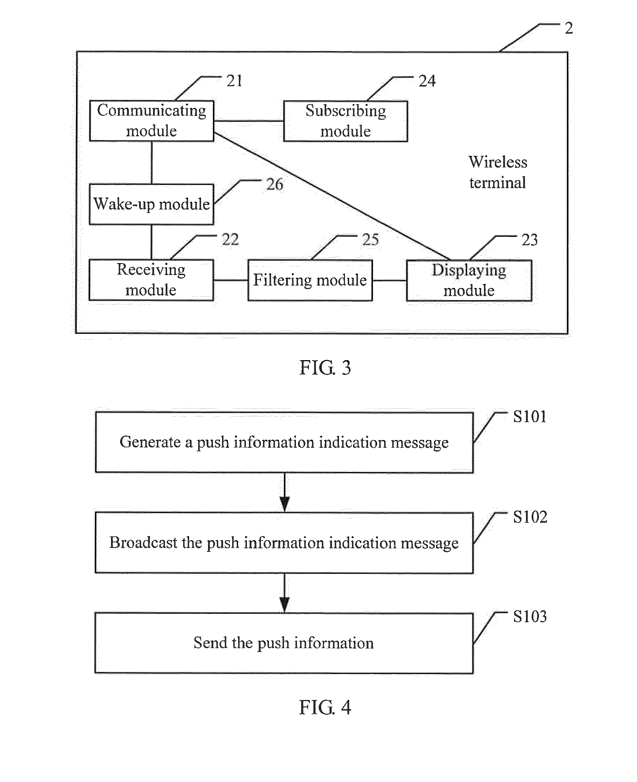

Furthermore, FIG. 3 is a schematic structural diagram of a wireless terminal in FIG. 1. The structure is described by using a wireless terminal 2 as an example, and the structures of other wireless terminals may be the same as that of the wireless terminal 2. The wireless terminal 2 may include:
a communicating module 21, configured to receive a push information indication message generated and broadcast by a WiFi access point;
a receiving module 22, configured to receive, according to the push information indication message, push information sent by the WiFi access point; and
a displaying module 23, configured to display the push information received by the receiving module 22;
where, the push information indication message generated by the WiFi access point includes index information of one or more pieces of push information, where the index information includes at least one of a sequence number, an information digest, a category number, and a category name of the push information.

The wireless terminal 2 receives the push information indication message through the communicating module 21, and knows the AP1 broadcasting the push information indication message has which information to be pushed, push time, and other information, so that the receiving module 22 receives, according to the indication of the push information indication message, the push information content subsequently sent by the AP1.

Specifically, the AP1 may send the push information by broadcast. Specifically, the push information indication message may further include the push time corresponding to the one or more pieces of push information; when the push time arrives, the AP1 broadcasts, according to the push time corresponding to the push information, the push information corresponding to the push time. When the push time arrives, the receiving module 22 of the wireless terminal 2 may receive, according to the push time corresponding to the one or more pieces of push information indicated in the push information indication message, push information broadcast by the AP1 and corresponding to the push time that arrives. The receiving module 22 may wake the WiFi function of the wireless terminal, when the corresponding push time arrives, to receive the push information corresponding to the push time that arrives.

Further, as shown in FIG. 3, the wireless terminal 2 may further include:
a subscribing module 24, configured to generate a subscription request message according to the received push information indication message after the communicating module 21 receives the broadcast push information indication message, where the subscription request message includes index information of one or more pieces of push information requested from the wireless access point.

When the communicating module 21 receives the push information indication message, the push information indication message may be displayed, through the displaying module 23, to the user for viewing, and the user makes selections manually according to the push information indication message to selectively subscribe to the push information of interest, and the subscribing module 24 performs a corresponding subscription operation after receiving a subscription selection instruction; or after the communicating module 21 receives the push information indication message, the subscribing module 24 automatically performs filtering according to the preset filtering conditions including the category and/or keyword to make selections and complete the corresponding subscription operation. The subscription operation completed by the subscribing module 24 includes generating a subscription request message, where the subscription request message includes index information of one or more pieces of push information requested by the wireless terminal. In this case, the displaying module 23 is further configured to display the push information indication message received by the communicating module 21.

The communicating module 21 is further configured to send the subscription request message to the WiFi access point, and receive a subscription response message sent by the WiFi access point according to the subscription request message, where the subscription response message includes information indicating subscription success or failure.

The receiving module 22 is specifically configured to: after the communicating module 21 receives a response message indicating subscription success from the WiFi access point, receive, according to the push information indication message, push information sent by the WiFi access point and corresponding to location information of the wireless terminal, in the push information requested by the subscription request message. After determining that the subscription of the wireless terminal is successful, the WiFi access point may obtain the location information of the wireless terminal. The WiFi access point may obtain the location of the wireless terminal in a WiFi-based location obtaining mode, or through the GPS location information or other location information directly uploaded by the wireless terminal, so as to determine whether the wireless terminal arrives at the predetermined location, and when knowing that the wireless terminal is located in a predetermined location range, send the push information corresponding to the predetermined location to the wireless terminal. The location of the wireless terminal may also be obtained by using other methods, which are not limited by the present invention. The WiFi access point may store the information of the predetermined location corresponding to each piece of push information, where the predetermined location is a specific location range in the coverage of the WiFi access point, for example, a location range of an exhibition stand in a big exhibition hall; when the WiFi access point knows that the wireless terminal is located in the location range of the exhibition stand, and the wireless terminal has subscribed to the push information related to the exhibition stand successfully, the WiFi access point sends the push information corresponding to the exhibition stand to the wireless terminal.

The subscription request message may be in the information frame format shown in Table 4:

**Table 4**

| | |
|---|---|
| MAC Header | Category of Subscribed Push Information |

The category of the subscribed push message in Table 4 indicates the category of the push information subscribed by the user through the subscribing module 24.

The subscription response message sent by the AP1 according to the subscription request message may be specifically in the information frame format shown in Table 5:

**Table 5**

| | |
|---|---|
| MAC Header | Subscription Result |

The subscription result in Table 5 is a success or failure indication.

Further, the push information indication message may further include the push time corresponding to the one or more pieces of push information.

The receiving module 22 is specifically configured to: after the communicating module 21 receives a response message indicating subscription success from the WiFi access point, receive, according to the push time indicated in the push information indication message, push information sent by the WiFi access point and corresponding to the location information of the wireless terminal and corresponding to the push time, in the push information requested by the subscription request message. To be specific, the WiFi access point may unicast the corresponding push information to the wireless terminal according to the time and the location of the wireless terminal.

In addition, Optionally, the wireless terminal 2 may further include:
a filtering module 25, configured to execute a filtering operation for the push information received by the communicating module 21.

The displaying module 23 is specifically configured to display the push information filtered by the filtering module 25 to the user.

The filtering module 25 may automatically perform filtering, according to the preset filtering conditions including the category and/or keyword, for the push information received by the communicating module 21, for example, filter out the push information including no keyword "short shirt" according to the keyword. Or the received push information is directly displayed to the user, the user manually sets filtering conditions including the category and/or keyword, and the filtering module 25 filters, according to the preset filtering conditions and/or the filtering conditions set by the user, the push information received by the communicating module 21. Finally, the displaying module 23 displays the push information finally obtained by filtering by the filtering module 25 to the user for viewing.

Further, optionally, as shown in FIG. 3, the wireless terminal 2 may further include:
a wake-up module 26, configured to wake up the WiFi function of the wireless terminal 2 when the push time indicated in the push information indication message received by the communicating module 21 arrives and if the WiFi function of the wireless terminal 2 is in the dormant state, so that the communicating module 21 receives the push information. For some push information sent at fixed time, the wake-up module 26 may be set to wake up the WiFi function of the wireless terminal 2 when the push time arrives, after the push time of the push information sent at fixed time is known according to the push information indication message. Thereby, power consumption of the wireless terminal may be reduced effectively.

It can be seen from the description of the above embodiment that, the present invention has the following advantages:
The embodiment of the present invention implements information pushing on widely used WiFi networks. In the embodiment of the present invention, a push information indication message is broadcast to forecast for the user which push information will be pushed, and then the push information is sent at specific time and/or a specific place. Thereby, not only the user (or wireless terminal) can obtain some useful push information at the corresponding time and/or place, but also power consumption of the wireless terminal can be reduced; in addition, after receiving the push information indication message, the user may select the push information to complete information subscription, and obtain push information of interest, which further improves the user experience.

The following describes a method for pushing information based on WiFi in the present invention in detail.

FIG. 4 is a schematic flowchart of a first embodiment of a method for pushing information based on WiFi according to the present invention. The method in this embodiment includes the following:
S101. Generate a push information indication message, where the push information indication message includes index information of one or more pieces of push information, where the index information includes at least one of a sequence number, an information digest, a category number, and a category name of the push information.

Specifically, the push information is provided by an information publisher, where the function of the push information indication message is to forecast for a wireless terminal the WiFi access point AP has which push information to be pushed, push time, and other information, to facilitate receiving of the wireless terminal.

After obtaining the push information that the information publisher needs to send, the AP generates a push information indication message according to the push information. Specifically, an information element may be added to a Beacon as a push information indication message, used to indicate the corresponding push information, where the structure of the information element may be the format shown in Table 1 or Table 2.
S102. Broadcast the push information indication message, for example, broadcast the Beacon in step S101.

Step S102 may be as follows: After the AP generates a push information indication message, the AP may immediately broadcast the generated push information indication message according to the specific requirement, or may also broadcast the corresponding push information indication message periodically according to a certain time interval.
S103. Send the push information.

Specifically, the AP in step S103 may broadcast the push information when the WiFi access point determines that the push time of the push information arrives, or send the push information to some wireless terminals (which may be a part of the wireless terminals screened out according to a predetermined rule, for example, a predetermined number segment of the wireless terminals), where arrival of the push time may be determined through a system clock or a timer.

Or, the AP obtains the location of the wireless terminal, and sends the push information corresponding to the predetermined location to the wireless terminal when the wireless terminal arrives at or is in the predetermined location.

Or, when determining that the push time of the push information arrives, the AP obtains the location of the wireless terminal, and sends the push information corresponding to the location information and corresponding to the push time to the wireless terminal.

The AP may obtain the location of the wireless terminal, in a WiFi-based location obtaining mode, or through the GPS location information or other location information directly uploaded by the wireless terminal, so as to determine whether the wireless terminal arrives at the predetermined location. The location of the wireless terminal may also be obtained by using other methods, which are not limited by the present invention.

The predetermined location may be a location range, for example, several meters around a specific exhibition stand may all belong to a predetermined location. When the wireless terminal arrives at or is in a predetermined location (such as an exhibition stand), the AP sends the corresponding push information to the wireless terminal. Optionally, when the push time corresponding to the push information of the exhibition stand arrives, and the user does not leave the location range (including arriving at and being located in the location range of the exhibition stand) of the exhibition stand, the AP sends the corresponding push information related to the exhibition stand to the wireless terminal.

The wireless terminal may perform filtering after receiving the push information, for example, perform filtering according to the preset keyword and/or the keyword set by the user, and finally obtain the push information that the user is interested in for displaying to the user, and delete or discard the information that is filtered out.

It can be seen from the description of the above embodiment that, the present invention has the following advantages:
The embodiment of the present invention implements information pushing on widely used WiFi networks. In the embodiment of the present invention, a push information indication message is broadcast to forecast for the user which push information will be pushed, and then the push information is sent at specific time and/or a specific place. Thereby, not only the user can obtain some useful push information at the corresponding time and/or place, but also power consumption of the mobile terminal of the user can be reduced.

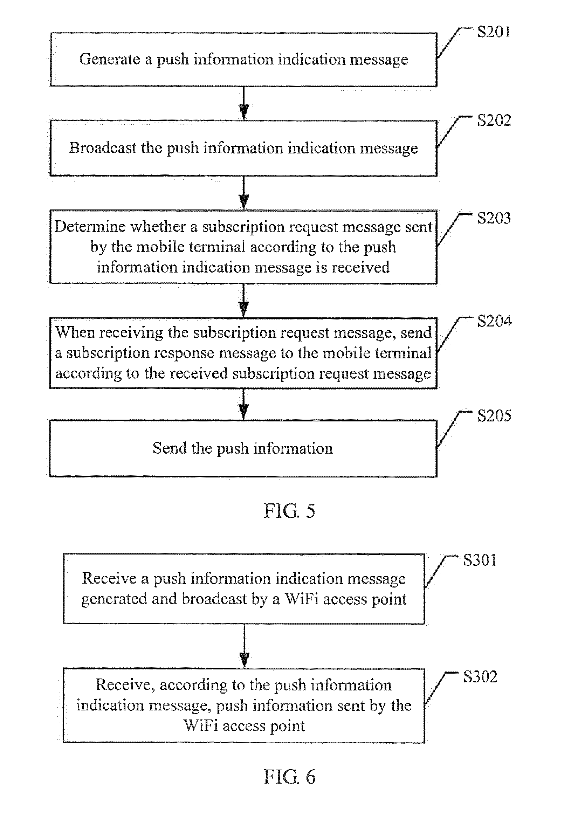

FIG. 5 is a schematic flowchart of a second embodiment of a method for pushing information based on WiFi according to the present invention. The method in this embodiment includes the following:
S201. Generate a push information indication message, where the push information indication message includes index information of one or more pieces of push information, where the index information includes at least one of a sequence number, an information digest, a category number, and a category name of the push information.

Specifically, the sequence number of the push information may be allocated by the system, the information digest may be obtained by performing an operation for the push information content by using a Hash algorithm, and the category number and category name are used to indicate the category of the push information, for example, the category number is 01, and the category name is clothing.
S202. Broadcast the push information indication message.

The push information indication message generated in step S202 may be in the frame format in Table 2.
S203. Determine whether a subscription request message sent by the wireless terminal according to the push information indication message is received.

When receiving the push information indication message, the wireless terminal may generate, according to the filtering conditions including the category and/or keyword preset on the wireless terminal, a subscription request message and send the message to the AP, so as to selectively subscribe to the push information indicated by the push information indication message; or, when receiving the push information indication message, the wireless terminal may display the content of the push information indication message to the user for viewing, so that the user makes selections manually according to the push information indication message, and after the wireless terminal receives the selective subscription instruction of the user, the wireless terminal generates a subscription request message and sends it to the AP, where the information frame format of the subscription request message may be the format shown in Table 4. Step S204 is executed when the subscription request message is received. If the subscription request message is not received, the AP may send, by broadcast, the push information indicated by the push information indication message. Specifically, the AP broadcasts the push information when determining that the push time of one piece of the push information arrives.
S204. When receiving the subscription request message, send a subscription response message to the wireless terminal according to the received subscription request message, where the subscription response message includes information indicating subscription success or failure; the step S204 is used to prompt the user whether the subscription is successful.
S205. Send the push information.

The step S205 may be specifically as follows: After determining that the subscription of the wireless terminal is successful, the AP obtains the location information of the wireless terminal, and pushes, to the wireless terminal according to the location information of the wireless terminal, push information corresponding to the location information, in the push information requested by the subscription request message;
or the AP sends, at push time, to the wireless terminal according to the location information of the wireless terminal, push information corresponding to the location information and corresponding to the push time, in the push information requested by the subscription request message.

The location information of the wireless terminal may be obtained in a WiFi positioning mode, that is, the user reports location configuration information and reporting time to the AP and multiple secondary APs through the wireless terminal periodically, and the AP performs a comprehensive operation to obtain the coordinates of the wireless terminal, namely, the location, according to the location configuration information and reporting time reported by the wireless terminal and received by the AP itself, the location configuration information and corresponding reporting time of the wireless terminal transmitted from the other multiple secondary APs, and the location coordinates of the AP and the other multiple secondary APs. Definitely, the location information reported by the wireless terminal in real time may be obtained by obtaining the location information of the wireless terminal through positioning systems such as the GPS in the prior art.

Specifically, when a subscription request message of the mobile terminal exists, the AP may send, according to the obtained location information of the wireless terminal, all the push information that the user subscribes to through the subscription request message to the user of the wireless terminal; or when the wireless terminal arrives at or is in a predetermined location, send to the user of the wireless terminal the push message corresponding to the predetermined location, in the push information that the wireless terminal subscribes to through the subscription request message; or when the push time corresponding to the push information of a predetermined location arrives, and the user does not leave the location range (including arriving at and being located in the location range of the predetermined location) of the predetermined location, send to the user of the wireless terminal the push message corresponding to the predetermined location, in the push information that the wireless terminal subscribes to through the subscription request message.

If no subscription request message exists, the AP may send all push information corresponding to the predetermined location to the wireless terminal when the wireless terminal arrives at the predetermined location. Definitely, in other embodiments, if the user selects not to subscribe to any push information, the subscription request message may not be sent, or, the subscription request message may indicate that the user refuses to subscribe and does not include index information of any push information; thereby, the AP does not push any push information to the user.

Optionally, the push information indication message may include push time corresponding to one or more pieces of push messages. The wireless terminal may use the WiFi function, at push time indicated in the push information indication message, to receive the push information sent by the AP and corresponding to the push time.

After receiving the push information sent by the AP, the wireless terminal may further execute, according to the preset filtering conditions or the filtering conditions set by the user, a filtering operation for the push information sent by the AP. Specifically, the wireless terminal may perform filtering according to the keyword, and display the filtered push information to the user, for example, filter out the push information including no keyword "short shirt".

It can be seen from the description of the above embodiment that, the present invention has the following advantages:
The embodiment of the present invention implements information pushing on widely used WiFi networks. In the embodiment of the present invention, first the WiFi access point generates and broadcasts a push information indication message, and then after receiving the subscription request message of the wireless terminal and determining subscription success, sends, to the wireless terminal according to the location information of the wireless terminal, push information that the wireless terminal subscribes to; the WiFi access point may also send the push information according to the location of the wireless terminal when the push time of the push information that the wireless terminal subscribes to arrives. In the embodiment of the present invention, the user can selectively subscribe to the push information after receiving the push information indication message; when the user is in a predetermined location, the user can obtain the push information corresponding to the predetermined location, in the push message that the user subscribes to; the user can also obtain the subscribed push information at the corresponding push time, which reduces power consumption of the wireless terminal of the user; in addition, the user can perform filtering for the received push information, and obtain push information of interest, which further improves the user experience.

FIG. 6 is a schematic flowchart of a first embodiment of another method for pushing information based on WiFi according to the present invention. The method in this embodiment includes the following:
S301. Receive a push information indication message generated and broadcast by a WiFi access point.

The push information indication message generated by the WiFi access point includes index information of one or more pieces of push information, where the index information includes at least one of a sequence number, an information digest, a category number, and a category name of the push information.

S302. Receive, according to the push information indication message, push information sent by the WiFi access point.

The wireless terminal is located in the coverage of the WiFi access point, and receives the push information indication message broadcast by the AP (the AP herein refers to the WiFi access point) and the push information sent by the AP.

Specifically, the push information indication message may further include push time corresponding to the one or more pieces of push information; the wireless terminal may receive the push information corresponding to the push time at the push time according to the push time corresponding to the one or more pieces of push information indicated in the push information indication message. The AP may broadcast the push information corresponding to each push time at each push time in the push time corresponding to the one or more pieces of push information. The wireless terminal may preset filtering conditions such as filtering based on the keyword or category, and when receiving the push information indication message, filter the push information indicated by the push information indication message, obtain the push time of the push information to be received by the wireless terminal, and then receive, at the corresponding push time, the push information broadcast by the AP and corresponding to the push time. Thereby, the wireless terminal can selectively receive the push information broadcast by the AP.

It can be seen from the description of the above embodiment that, the present invention has the following advantages:
The embodiment of the present invention implements information pushing on widely used WiFi networks. In the embodiment of the present invention, a push information indication message is broadcast to forecast for the user which push information will be pushed, and then the push information is sent at specific time. Thereby, not only the user can obtain some useful push information at the corresponding time, but also power consumption of the wireless terminal of the user can be reduced.

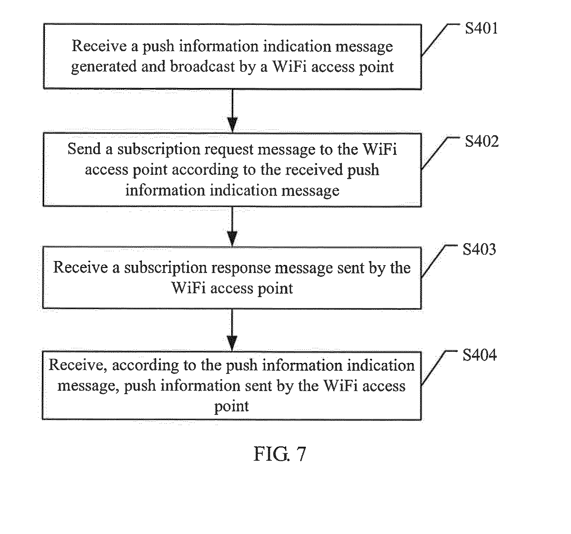

FIG. 7 is a schematic flowchart of a second embodiment of another method for pushing information based on WiFi according to the present invention. The method in this embodiment includes the following:
S401. Receive a push information indication message generated and broadcast by a WiFi access point.

The push information indication message generated by the WiFi access point includes index information of one or more pieces of push information, where the index information includes at least one of a sequence number, an information digest, a category number, and a category name of the push information.

S402. Send a subscription request message to the WiFi access point according to the received push information indication message, where the subscription request message includes index information of one or more pieces of push information requested from the WiFi access point.

The wireless terminal located in the coverage of the WiFi access point, when receiving the push information indication message, may generate a subscription request message according to the preset filtering conditions including the category and/or keyword, and send the subscription request message to the AP, so as to selectively subscribe to the push information indicated by the push information indication message; or display the content of the push information indication message to the user for viewing, so that the user makes selections manually according to the push information indication message, and then after receiving the selections of the user, generate a subscription request message, and send the subscription request message to the AP (namely, the WiFi access point).

The WiFi access point sends a subscription response message to the wireless terminal according to the received subscription request message, where the subscription response message includes information indicating subscription success or failure.
S403. Receive a subscription response message sent by the WiFi access point, where the subscription response message includes information indicating subscription success or failure.
S404. Receive, according to the push information indication message, push information sent by the WiFi access point.

Step S404 may be as follows: After receiving a response message indicating subscription success from the WiFi access point, receive push information sent by the WiFi access point and corresponding to location information of the wireless terminal, in the push information requested by the subscription request message.

After determining that the subscription of the wireless terminal is successful, the AP may obtain the location information of the wireless terminal, and push the push information requested by the subscription request message to the wireless terminal according to the location information of the wireless terminal. Specifically, according to the obtained location information of the wireless terminal, the AP may send all the push information that the user subscribes to through the subscription request message to the user of the wireless terminal; or when the wireless terminal arrives at or is in a predetermined location, send to the user of the wireless terminal the push message corresponding to the predetermined location, in the push information that the wireless terminal subscribes to through the subscription request message; or when the push time corresponding to the push information of a predetermined location arrives, and the user does not leave the location range (including arriving at and being located in the location range of the predetermined location) of the predetermined location, send to the user of the wireless terminal the push message corresponding to the predetermined location, in the push information that the wireless terminal subscribes to through the subscription request message.

Further, Optionally, the push information indication message may further include the push time corresponding to the one or more pieces of push information; after receiving the response message indicating subscription success from the WiFi access point, the wireless terminal may receive, according to the push time indicated in the push information indication message, the push information sent by the WiFi access point and corresponding to the location information of the wireless terminal and corresponding to the push time, in the push information requested by the subscription request message.

Finally, the wireless terminal may further execute, according to the preset filtering conditions or the filtering conditions set by the user, a filtering operation for the push information sent by the WiFi access point. Specifically, the wireless terminal may perform filtering according to the keyword, and display the filtered push information to the user, for example, filter out the push information including no keyword "short shirt".

It can be seen from the description of the above embodiment that, the present invention has the following advantages:
The embodiment of the present invention implements information pushing on widely used WiFi networks. In the embodiment of the present invention, the wireless terminal receives the push information indication message generated and broadcast by the WiFi access point, and then selectively subscribes to the push information according to the filtering conditions preset by the wireless terminal or the manual selections of the user; after successful subscription, the wireless terminal receives the push information that the wireless terminal subscribes to and is sent by the WiFi access point according to the location of the wireless terminal. The WiFi access point may send, according to the obtained location information of the wireless terminal, all the push information that the user subscribes to through the subscription request message to the user of the wireless terminal; or when the wireless terminal arrives at or is in a predetermined location, send to the user of the wireless terminal the push message corresponding to the predetermined location, in the push information that the wireless terminal subscribes to through the subscription request message; or according to the location of the wireless terminal, at the push time of the push information that the wireless terminal subscribes to, send the push information corresponding to the location information of the wireless terminal and corresponding to the push time.

In the embodiment of the present invention, the user can selectively subscribe to the push information after receiving the push information indication message; when the user is in a predetermined location, the user can obtain the push information corresponding to the predetermined location, in the push message that the user subscribes to; the user can also obtain desired push information at the corresponding push time, which reduces power consumption of the wireless terminal of the user; the user can also obtain the push information related to the location information from the subscribed push message at push time and at the location of the user at the time. In addition, the user can perform filtering for the received push information, and obtain push information of interest, which further improves the user experience.

It should be noted that the AP herein refers to a WiFi access point. The AP may also be a micro base station.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a Read-Only Memory (Read-Only Memory, ROM), or a Random Access Memory (Read-Only Memory, RAM).

The foregoing descriptions are merely exemplary embodiments of the present invention. However, the protection scope of the present invention is not limited thereto. Therefore, equivalent changes derived according to the claims of the present invention shall fall within the protection scope of the present invention.

## Claims

1. A method for pushing information based on a wireless local area network, comprising:
generating a push information indication message, wherein the push information indication message comprises index information of one or more pieces of push information, wherein the index information comprises at least one of a sequence number, an information digest, a category number, and a category name of the push information;
broadcasting the push information indication message; and
sending the push information.

2. The method according to claim 1, wherein: after the broadcasting the push information indication message, the method further comprises:
receiving a subscription request message sent by a wireless terminal, wherein the subscription request message comprises index information of one or more pieces of push information requested by the wireless terminal;
sending a subscription response message to the wireless terminal according to the received subscription request message, wherein the subscription response message comprises information indicating subscription success or failure; and
obtaining location information of the wireless terminal after determining that the subscription of the wireless terminal is successful; and
the sending the push information specifically comprises: sending, to the wireless terminal according to the location information of the wireless terminal, push information corresponding to the location information, in the push information requested by the subscription request message.

3. The method according to claim 1, wherein: before the generating the push information indication message, the method further comprises:
determining push time corresponding to one or more pieces of push information;
the push information indication message further comprises the push time corresponding to the one or more pieces of push information; and
the sending the push information specifically comprises: sending, at the push time, the push information corresponding to the push time, in the one or more pieces of push information.

4. The method according to claim 2, wherein: before the generating the push information indication message, the method further comprises:
determining push time corresponding to one or more pieces of push information;
the push information indication message further comprises the push time corresponding to the one or more pieces of push information; and
the sending the push information specifically comprises:
sending, at the push time, to the wireless terminal according to the location information of the wireless terminal, push information corresponding to the location information and corresponding to the push time, in the push information requested by the subscription request message.

5. The method according to any one of claims 1 to 4, wherein the wireless local area network is a WiFi network.

6. A method for pushing information based on a wireless local area network, comprising:
receivinga push information indication message generated and broadcast by a wireless access point; and
receiving, according to the push information indication message, push information sent by the wireless access point;
wherein, the push information indication message generated by the wireless access point comprises index information of one or more pieces of push information, wherein the index information comprises at least one of a sequence number, an information digest, a category number, and a category name of the push information.

7. The method according to claim 6, wherein: after the receiving the push information indication message generated and broadcast by the wireless access point, the method further comprises:
Sending a subscription request message to the wireless access point according to the received push information indication message, wherein the subscription request message comprises index information of one or more pieces of push information requested from the wireless access point; and
receiving a subscription response message sent by the wireless access point, wherein the subscription response message comprises information indicating subscription success or failure; and
the receiving push information sent by the wireless access point specifically comprises: after receiving a response message indicating subscription success from the wireless access point, receiving push information sent by the wireless access point and corresponding to location information of the wireless terminal, in the push information requested by the subscription request message.

8. The method according to claim 6, wherein: the push information indication message further comprises push time corresponding to the one or more pieces of push information; and
the receiving, according to the push information indication message, push information sent by the wireless access point specifically comprises: receiving, according to the push time indicated in the push information indication message, push information sent by the wireless access point and corresponding to the push time.

9. The method according to claim 7, wherein: the push information indication message further comprises push time corresponding to the one or more pieces of push information; and
the receiving push information sent by the wireless access point specifically comprises: after receiving a response message indicating subscription success from the wireless access point, receiving, according to the push time indicated in the push information indication message, push information sent by the wireless access point and corresponding to the location information of the wireless terminal and corresponding to the push time, in the push information requested by the subscription request message.

10. The method according to any one of claims 6 to 9, wherein: the wireless local area network is a WiFi network, and the wireless access point is a WiFi access point.

11. A wireless access point, comprising:
a processing module, configured to generate a push information indication message, wherein the push information indication message comprises index information of one or more pieces of push information, wherein the index information comprises at least one of a sequence number, an information digest, a category number, and a category name of the push information;
a broadcasting module, configured to broadcast the push information indication message; and
a sending module, configured to send the push information.

12. The wireless access point according to claim 11, wherein:
the processing module is further configured to determine push time corresponding to one or more pieces of push information and add the push time to the push information indication message; and
the sending module is specifically configured to send, at the push time, the push information corresponding to the push time, in the one or more pieces of push information.

13. The wireless access point according to claim 11, further comprising:
a determining module, configured to determine whether a subscription request message sent by a wireless terminal according to the push information indication message is received, wherein the subscription request message comprises index information of one or more pieces of push information requested by the wireless terminal;
a responding module, configured to send a subscription response message to the wireless terminal according to the received subscription request message when a determination result of the determining module is yes, wherein the subscription response message comprises information indicating subscription success or failure; and
a location obtaining module, configured to obtain location information of the wireless terminal after determining that the subscription of the wireless terminal is successful; wherein
the sending module is specifically configured to send, to the wireless terminal according to the location information of the wireless terminal determined by the location obtaining module, push information corresponding to the location information, in the push information requested by the subscription request message.

14. The wireless access point according to claim 13, wherein:
the processing module is further configured to determine push time corresponding to one or more pieces of push information and add the push time corresponding to the one or more pieces of push information to the push information indication message; and
the sending module is specifically configured to send, at the push time, to the wireless terminal according to the location information of the wireless terminal, push information corresponding to the location information and corresponding to the push time, in the push information requested by the subscription request message.

15. The wireless access point according to any one of claims 11 to 14, wherein the wireless access point comprises a WiFi access point.

16. A wireless terminal, comprising:
a communicating module, configured to receive a push information indication message generated and broadcast by a wireless access point;
a receiving module, configured to receive, according to the push information indication message, push information sent by the wireless access point; and
a displaying module, configured to display the push information received by the receiving module to a user;
wherein, the push information indication message generated by the wireless access point comprises index information of one or more pieces of push information, wherein the index information comprises at least one of a sequence number, an information digest, a category number, and a category name of the push information.

17. The wireless terminal according to claim 16, further comprising:
a subscribing module, configured to generate a subscription request message according to the received push information indication message after the communicating module receives the broadcast push information indication message, wherein the subscription request message comprises index information of one or more pieces of push information requested from the wireless access point; wherein
the communicating module is further configured to send the subscription request message to the wireless access point, and receive a subscription response message sent by the wireless access point according to the subscription request message, wherein the subscription response message comprises information indicating subscription success or failure; and
the receiving module is specifically configured to: after the communicating module receives a response message indicating subscription success from the wireless access point, receive, according to the push information indication message, push information sent by the wireless access point and corresponding to location information of the wireless terminal, in the push information requested by the subscription request message.

18. The wireless terminal according to claim 16, wherein: the push information indication message further comprises push time corresponding to the one or more pieces of push information; and
the receiving module is specifically configured to receive push information corresponding to the push time according to the push time indicated in the push information indication message.

19. The wireless terminal according to claim 17, wherein: the push information indication message further comprises push time corresponding to the one or more pieces of push information; and
the receiving module is specifically configured to: after the communicating module receives a response message indicating subscription success from the wireless access point, receive, according to the push time indicated in the push information indication message, push information sent by the wireless access point and corresponding to the location information of the wireless terminal and corresponding to the push time, in the push information requested by the subscription request message.

20. The wireless terminal according to any one of claims 16 to 19, wherein the wireless access point is a WiFi access point.

21. A system for pushing information based on a wireless local area network, comprising at least one wireless access point and at least one wireless terminal, wherein the wireless access point comprises the wireless access point according to any one of claims 11 to 15, and the wireless terminal comprises the wireless terminal according to any one of claims 16 to 20.

22. The system according to claim 21, wherein: the wireless local area network is a WiFi network, and the wireless access point is a WiFi access point.
